# EUROPEAN PATENT SPECIFICATION

(11) **EP 2 921 433 B1**
(45) Date of publication and mention of the grant of the patent: **28.09.2016**
(21) Application number: 15157337.5
(22) Date of filing: 03.03.2015
(51) Int. Cl.: B65G 19/02, B65G 54/02

(54) **CONVEYOR FOR A PACKAGING LINE**
FÖRDERER FÜR EINE VERPACKUNGSLINIE
CONVOYEUR POUR UNE LIGNE DE CONDITIONNEMENT

(30) Priority: 21.03.2014 IT TO20140236
(43) Date of publication of application: 23.09.2015
(73) Proprietor: Cavanna S.p.A., 28077 Prato Sesia (NO) (IT)
(72) Inventor: Giacobbe, Fulvio, I-28077 Prato Sesia (Novara) (IT); Ioppa, Lorenzo, I-28077 Prato Sesia (Novara) (IT); Parino, Dario, I-28077 Prato Sesia (Novara) (IT)
(74) Representative: Marchitelli, Mauro

(56) References cited:
- WO-A1-2013/189656
- DE-A1-102008 040 204

## Description

### Field of the invention

The present invention relates to a conveyor for moving articles in packaging lines. The items to be transported can be: individual products, groups of products, containers, packaging, etc.

### State of the art

A conveyor widely used in packaging lines for advancing a continuous flow of articles spaced apart by a constant pitch comprises a continuous closed loop chain cooperating with two toothed pulleys, one of which is motorized. The chain is equipped with a plurality of pusher elements spaced apart along a longitudinal direction with a constant pitch. Between the pushers, movable seats for receiving respective articles are defined, which are made to advance in a transport direction by the movement of the chain.

This solution is particularly suitable in cases where the transport of articles takes place continuously, at a constant speed and pitch and without slowing down or stopping. This solution is, however, unsuitable in the case where operations must be carried out along the transport path, which require slowing-down or temporary stopping of the articles in certain areas of the transport path, for example, labeling operations, closing of containers, collecting or loading of products, etc.

To meet these requirements, conveyors have already been proposed with two or more independent chains, adjacent to each other in a direction transverse to the direction of transport. For example, EP1305215 describes a conveyor with two independently-operated chains equipped with respective pusher elements. This solution allows, for example, the selective stopping of a chain at a loading station while the other chain ensures a continuous flow of articles to the outlet of the transport system.

This solution becomes very complex when the conveyor must be equipped with a large number of transport units movable independently from each other.

WO2013/189656 describes a conveyor according to the preamble of claim 1, for feeding products or groups of products to a packaging machine, comprising a linear motor including a closed loop stator and a plurality of movers movable independently from each other along the stator. The movers are equipped with respective supports, and are operated so that each pair of movers retains a respective group of products compressed between the supports of the two movers. This system involves retaining the groups of products compressed between two adjacent supports, in order to support the group of products without dropping it. This solution is not usable, for example, when articles must be transported that are spaced apart in the transport direction by a certain pitch, or when the articles would interpenetrate each another if they are compressed.

### Object and summary of the invention

The present invention aims to provide a conveyor for a packaging line that overcomes the problems of the prior art.

According to the present invention, this object is achieved by a conveyor having the characteristics forming the subject of claim 1.

The claims form an integral part of the disclosure provided in relation to the invention.

### Brief description of the drawings

The present invention will now be described in detail with reference to the attached drawings, given purely by way of non-limiting example, wherein:
- Figure 1 is a schematic side view of a first embodiment of a conveyor according to the present invention,
- Figure 2 is a side view on an enlarged scale of the part indicated by the arrow II in Figure 1,
- Figure 3 is a plan view according to the arrow III of Figure 2,
- Figure 4 is an elevational view according to the arrow IV of Figure 2,
- Figure 5 is a perspective view of the part indicated by the arrow V of Figure 2,
- Figure 6 is a partial perspective view of a second embodiment of a conveyor according to the present invention, and
- Figure 7 is a side view according to the arrow VII of Figure 6.

### Detailed description

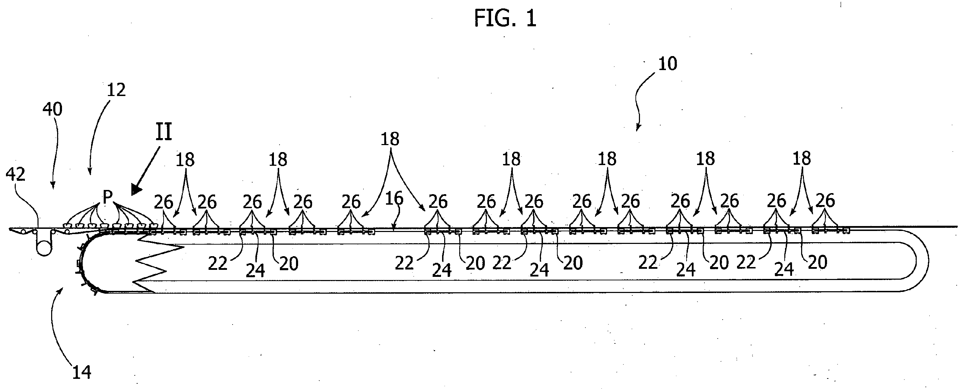

With reference to Figure 1, numeral 10 indicates a conveyor for a packaging line according to the present invention. The conveyor 10 is intended to transport a flow of articles in a longitudinal direction A, such as individual products, groups of products, containers, etc. In the illustrated example, the conveyor 10 carries out the transportation of a flow of individual products P which are loaded onto the conveyor 10 at a loading station 12.

The conveyor 10 comprises a linear motor 14 including a closed loop stator 16 and a plurality of autonomous transport units 18 movable independently from each other along the stator 16.

The stator 16 comprises two straight branches parallel to each other, joined at their ends by two semicircular sections. In the illustrated example, the two straight branches are superimposed in a vertical plane. The upper straight branch is a transport branch and the lower straight section is a return branch.

The linear motor 14 can be a linear synchronous motor (LSM), for example produced by JACOBS AUTOMATION LLC. The linear motor 14 comprises a plurality of movers movable along the stator 16, independently from each other and individually controlled by an electronic control unit.

In the case in which the objects to be transported are very wide (for example trays of an oven), two identical linear motors 14 may be provided, parallel to each other, with the transport units 18 of a linear motor 14 connected by transverse rods to homologous transport units 18 of the other linear motor 14.

Each transport unit 18 comprises a driving mover 20, a tensioning element 22 and a flexible connection element 24 which connects the driving mover 20 to the respective tensioning element 22. The driving mover 20 and the tensioning element 22 are respectively arranged at the head and tail of the respective transport units 18 with reference to the direction of movement.

If the flexible connection elements 24 are very long or heavy, each transport unit 18 can be provided with more driving elements 20 and more tensioning elements 22 in series with each other, in order to achieve the desired values of tension of the flexible connection elements 24.

The driving mover 20 is a mover of the linear motor 14, controlled by the electronic control unit of the linear motor 14 for imparting the required position, speed or acceleration to the respective transport unit 18. The driving mover 20 cooperates with the stator 16 by magnetic coupling and is electronically controlled according to well-known modalities in the field of linear motors.

The tensioning element 22 has the object of maintaining the respective flexible connection element 24 tensioned in an appropriate manner, both during the movement of the respective transport unit 18 and in the condition in which the respective transport unit 18 is stationary.

From a constructive point of view, the tensioning element 22 can be formed by a linear motor mover or it can be formed by a braking element.

In the case in which the tensioning element 22 is formed by a linear motor mover, it can be controlled so as to subject the flexible connection element 24 to a continuous active tensioning. In this case, for each transport unit 18, two identical movers are used for the function of the driving mover 20 and the tensioning element 22. The driving mover 20 imposes the position of the respective transport unit 18 while the mover that acts as a tensioning element 18 is operated by the electronic control unit according to a force control.

Alternatively, the linear motor mover which operates as a tensioning element can be controlled so as to carry out a discontinuous active tensioning. This is a case similar to the preceding one, but simpler. If the flexible connection elements 24 of the transport units 18 are relatively short and their stretching due to wear, in absolute value, is relatively low, the flexible connection element 24 only requires periodic tightening, for example during turning on of the machine or during the stops of the transport units 18. During normal operation, the driving mover 20 and the mover that operates as a tensioning element 22 work in electrical axis. In this case, the force control is applied at zero speed (stationary transport unit) for a reduced time. This control mode allows an increased duration of the flexible connection elements 24 because they are not subjected to a continuous tension during operation. The hypothesis for the correct functioning of this control mode is that the flexible connection element 24 does not stretch too much during regular operation, so that the tensioning does not have to be carried out in a continuous manner.

Alternatively, if the flexible connection element 24 is equipped with a certain elasticity, the tensioning element 22 and the driving mover 20 may be always operated in synchronism (electric axis control) and the tensioning of the flexible connection element 24 would be provided by the elasticity of the flexible connection element 24. This control mode is possible in the case of flexible connection elements 24 formed, for example, by elastic belts or chains of small dimensions.

As a further alternative, the tensioning element 22 can be a braking element, which carries out a passive tensioning of the flexible connection element 24. This mode of operation is more rudimentary but can be used in cases in which the transport units 18 move with a low speed and in which a high positioning accuracy is not required. In this case, the tensioning element 22 is a brake that opposes a certain resistance to advancing. The braking action can be obtained in many different ways, for example by friction or with electrodynamic systems. For example, the tensioning element could carry a permanent magnet facing a stationary conductive plate. In this way, an eddy current brake is produced, which generates a braking force proportional to the speed of the transport unit 18.

The flexible connection element 24 of each transport unit 18 can be formed by a roller chain, by a belt, by a rope or the like. In the present description and in the claims, "flexible connection element" is intended to indicate any folding element including articulated connection elements such as chains, in particular roller chains.

Each transport unit 18 comprises at least one transport element 26 connected to the respective flexible connection element 24. The transport elements 26 are configured for transporting respective products, groups of products or containers in the direction of movement A of the transport units 18. The transport elements 26 are preferably articulated to the respective flexible connection element 24 about respective axes orthogonal to the direction of movement A. Each transport unit 18 is preferably equipped with a plurality of transport elements 26 arranged between the driving mover 20 and the tensioning element 22.

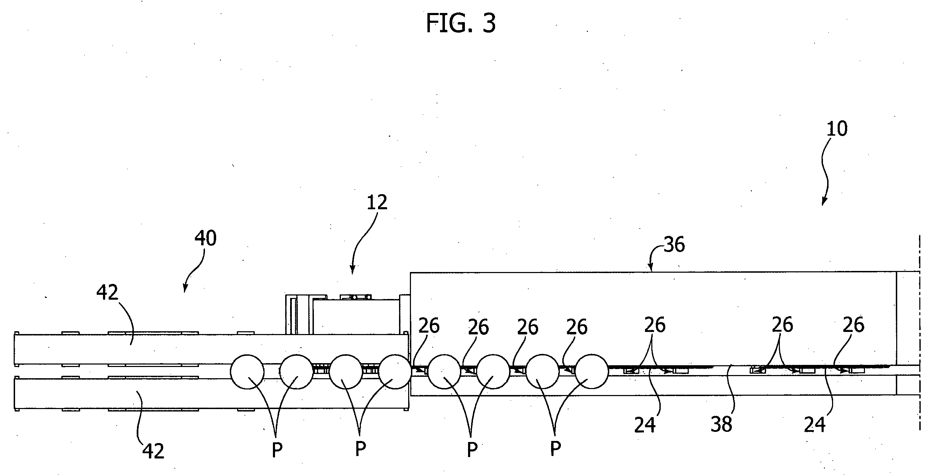

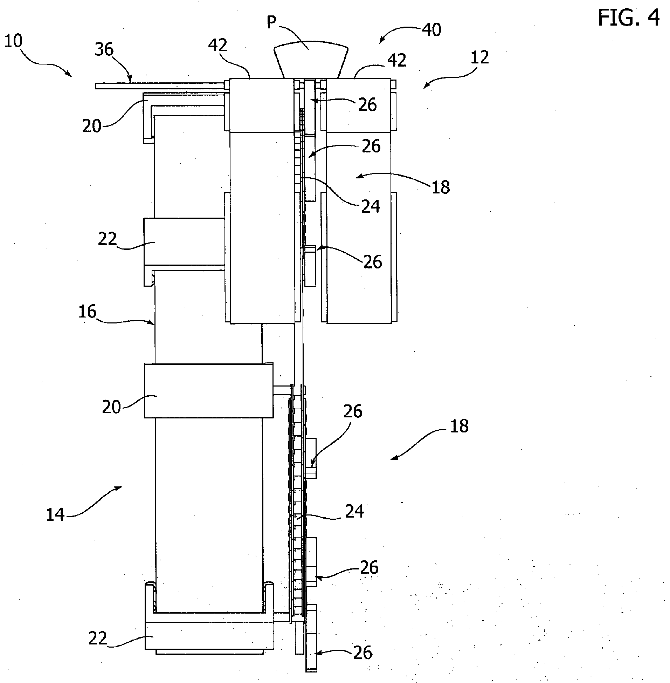

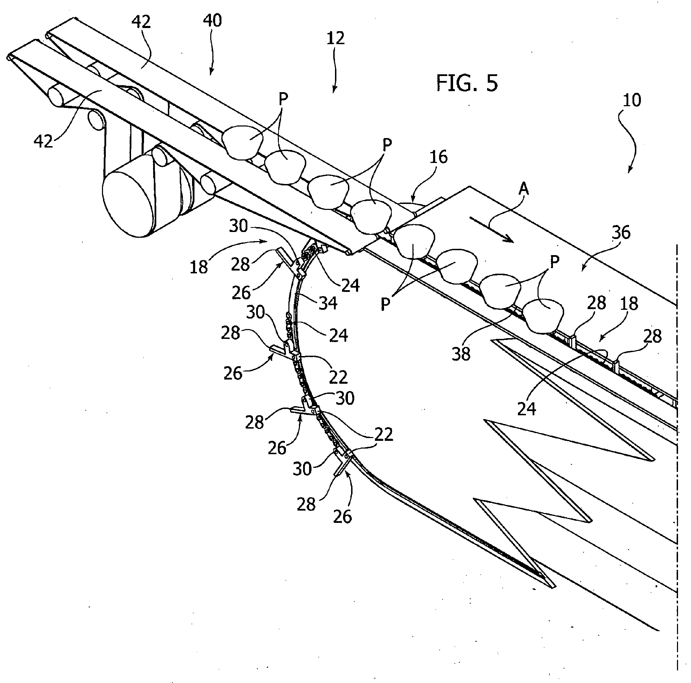

In the embodiment illustrated in Figures 1 to 5, each transport element 26 has a finger 28, articulation portion 30 and a guide portion 32. As seen in particular in Figure 5, the articulation portion 30 is articulated to the respective flexible connection element 24 about an axis transverse to the direction of movement A. The guide portions 32 of the transport elements 26 slidably engage a stationary guide 34 parallel to the stator 16 of the linear motor 14. The guide 34 can be, for example, formed by a groove which extends along a path parallel to the stator 16. The articulation portions 30 may be equipped with a pin that is movable in the groove forming the guide 34.

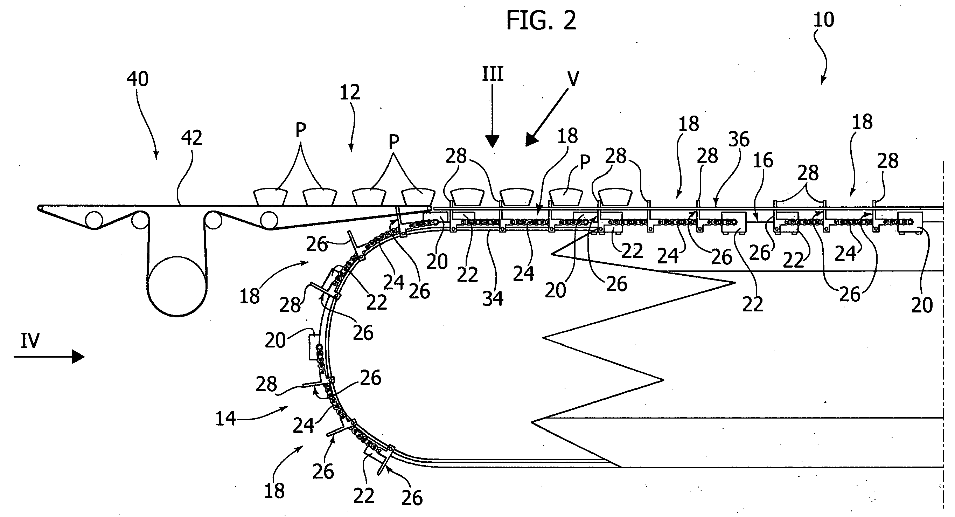

With reference to Figures 2 to 5, the conveyor 10 comprises a stationary horizontal wall 36 located above the upper horizontal branch of the stator 16, on which the products P rest. The wall 36 has a straight groove 38 parallel to the transport direction A. When the transport elements 26 travel along the upper horizontal branch of the stator 16, the respective fingers 28 protrude above the stationary wall 36 through the groove 38. The fingers 28 come into contact with the respective products P resting on the wall 36 and push the products P in the transport direction A. The products P are spaced apart in the transport direction A by a pitch equal to the distance between the fingers 28 of the transport elements 26.

The conveyor 10 may be associated with a loading device 40 which feeds the products P to the conveyor 10. In the embodiment illustrated in Figures 1-5, the loading device 40 feeds the products P in a direction parallel to the transport direction A. The loading device 40 can be formed by two parallel motorized belts 42, with respective upper horizontal branches essentially in line with the stationary wall 36. The two belts 42 are spaced apart in order to form a groove aligned with the groove 38 of the wall 36. The fingers 28 of the transport elements 26 enter with a movement from the bottom upwards into the groove formed between the tapes 42 and come into contact with respective products P. The transport elements 26 engage respective products P at the outlet of the loading device 40 and drag them onto the wall 36 in the direction A.

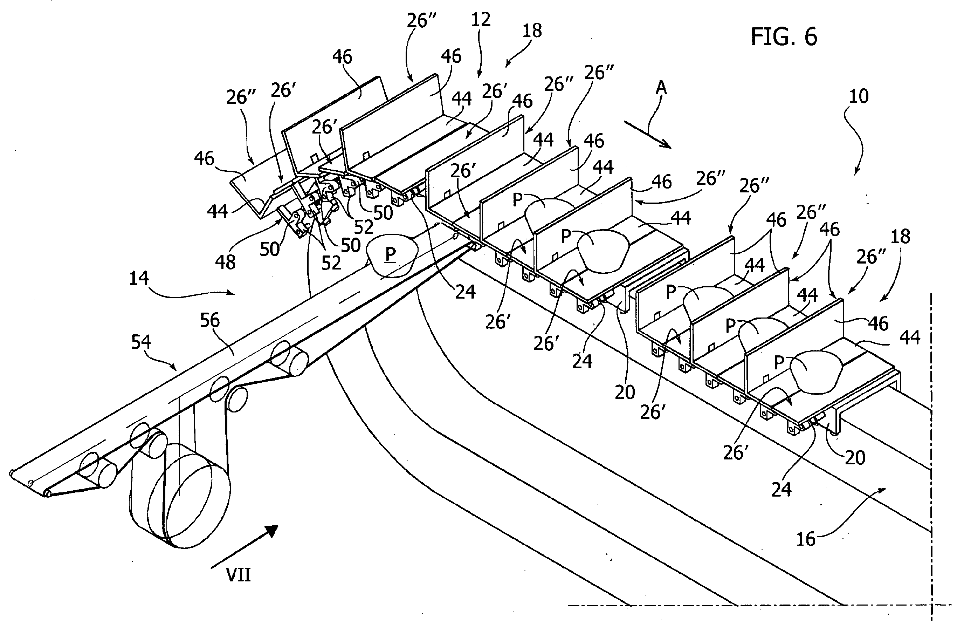

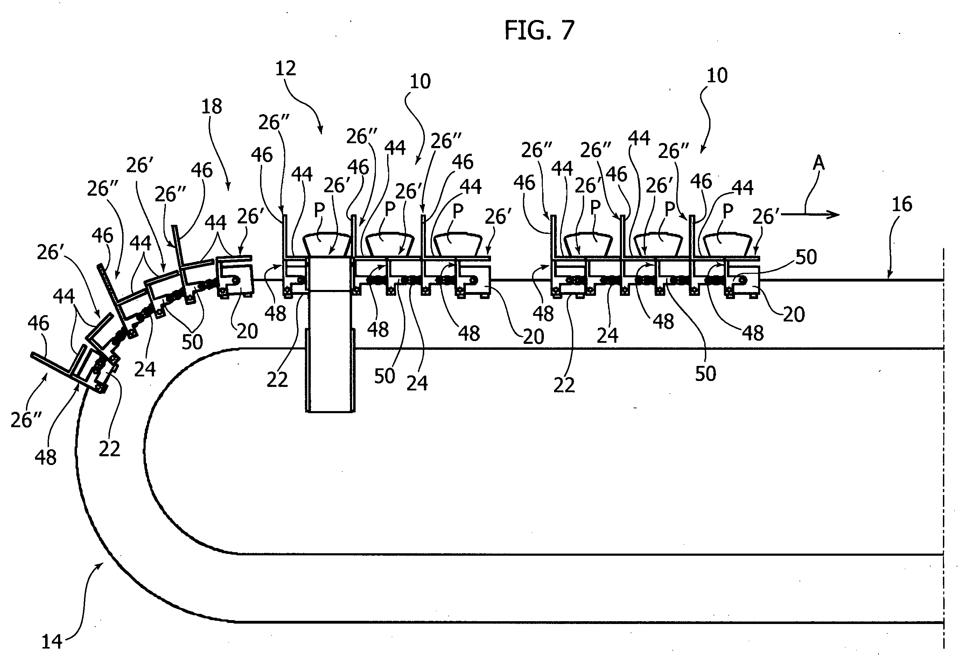

In Figures 6 and 7, an alternative embodiment of the conveyor 10 is illustrated. The elements corresponding to those previously described are indicated with the same reference numerals. In this case, the conveyor 10 is devoid of the stationary wall 36 and the transport elements 26 are shaped so as to support the products P. In this embodiment, each transport element 26 has a wall 44 tangential to the direction of movement A. The transport elements 26 can also have a wall 46, radial to the direction of movement A. In the example illustrated, transport elements 26' are provided, only having the tangential wall 44, alternating with transport elements 26" having both the tangential wall 44 and the radial wall 46.

When the transport elements 26', 26" move along the upper horizontal branch of the stator 16, the tangential walls 44 are horizontal and coplanar with each other. Each transport element 26', 26'' is fixed to a respective support 48 having an articulation portion 50 and a guide portion 52. The articulation portion 50 is articulated to the respective flexible connection element 44 about an axis transverse to the direction of movement A. The guide portion 52 slidably engages a guide parallel to the stator 16, in an analogous manner to that described above.

In the embodiment of Figures 6 and 7, the products P can be loaded onto the conveyor 10 by means of a loading device 54 transverse to the transport direction A. With reference to Figure 6, the loading device 54 has a motorized belt 56 movable in a direction transverse to the transport direction A of the conveyor 10.

Of course, without prejudice to the principle of the invention, the details of construction and the embodiments may widely vary with respect to those described and illustrated, without departing from the scope of the invention as defined by the following claims.

## Claims

1. A conveyor for a packaging line, comprising at least one linear motor (14) including a closed loop stator (16) and a plurality of autonomous transport units (18) movable along said stator (16) and controlled individually, wherein
each of said transport units (18) comprises at least one driving mover (20), the conveyor being **characterized in that** each of said transport units further comprises at least one tensioning element (22) and a flexible connection element (24) that mutually connects said at least one driving mover (20) and said at least one tensioning element (22), wherein in use said at least one tensioning element (22) keeps the respective flexible connection element (24) in a tensioned state.

2. A conveyor according to claim 1, **characterized in that** the tensioning element (22) is a mover of the linear motor (14), controlled so as to maintain a continuous active tensioning of the respective flexible connection element (24).

3. A conveyor according to claim 1, **characterized in that** the tensioning element (22) is a mover of the linear motor (14), controlled to produce a discontinuous active tensioning of the respective flexible connection element (24) and to move in synchrony with the respective driving mover (20).

4. A conveyor according to claim 1, **characterized in that** said flexible connection element (24) is elastic and **in that** said tensioning element (22) is a mover of the linear motor (14), controlled to move in synchrony with the respective driving mover (20), and wherein the tensioning of the flexible connection element (24) is provided by the elasticity of the flexible connection element (24).

5. A conveyor according to claim 1, **characterized in that** said tensioning element (22) is a brake element suitable for producing a passive tension of the respective flexible connection element (24).

6. A conveyor according to any one of the preceding claims, **characterized in that** each transport unit (18) comprises at least one transport element (26) connected to the respective flexible connection element (24).

7. A conveyor according to claim 6, **characterized in that** said transport element (26) is articulated to the respective flexible connection element (24) about an axis transverse to the direction of movement (A).

8. A conveyor according to claim 7, **characterized in that** said transport element (26) has a guide portion (32, 52) that engages a stationary guide (34) parallel to said stator (16).

9. A conveyor according to claim 6, **characterized in that** each transport unit (18) comprises a plurality of transport elements (26) arranged between the driving mover (20) and the tensioning element (22).

10. A conveyor according to claim 6, **characterized in that** it comprises a stationary horizontal wall (36) having a longitudinal groove (38) through which protruding fingers (28) of said transport elements (26) extend.

11. A conveyor according to claim 9, **characterized in that** each of said transport elements (26) has a wall (44) tangent to the direction of movement (A).

## Patentansprüche

1. Förderer für eine Verpackungslinie, der wenigstens einen Linearmotor (14), umfassend einen in sich geschlossenen Stator (16), und eine Mehrzahl autonomer Transporteinheiten (18), die entlang des Stators (16) bewegbar sind und einzeln gesteuert werden, umfasst, wobei
jede der Transporteinheiten (18) wenigstens ein Antriebsbewegungselement (20) umfasst, **gekennzeichnet durch** wenigstens ein Spannelement (22) und ein flexibles Verbindungselement (24), welches das wenigstens eine Antriebsbewegungselement (20) und das wenigstens eine Spannelement (22) wechselseitig verbindet, wobei bei Verwendung das wenigstens eine Spannelement (22) das entsprechende flexible Verbindungselement (24) in einem gespannten Zustand hält.

2. Förderer nach Anspruch 1, **dadurch gekennzeichnet, dass** das Spannelement (22) ein Bewegungselement des Linearmotors (14) ist, das so gesteuert wird, dass es ein kontinuierliches aktives Spannen des entsprechenden flexiblen Verbindungselements (24) aufrechterhält.

3. Förderer nach Anspruch 1, **dadurch gekennzeichnet, dass** das Spannelement (22) ein Bewegungselement des Linearmotors (14) ist, das so gesteuert wird, dass es ein nicht kontinuierliches aktives Spannen des entsprechenden flexiblen Verbindungselements (24) bewirkt und sich synchron mit dem entsprechenden Antriebsbewegungselement (20) bewegt.

4. Förderer nach Anspruch 1, **dadurch gekennzeichnet, dass** das flexible Verbindungselement (24) elastisch ist und dass das Spannelement (22) ein Bewegungselement des Linearmotors (14) ist, das so gesteuert wird, dass es sich synchron mit dem entsprechenden Antriebsbewegungselement (20) bewegt, und wobei das Spannen des flexiblen Verbindungselements (24) durch die Elastizität des flexiblen Verbindungselements (24) bewirkt wird.

5. Förderer nach Anspruch 1, **dadurch gekennzeichnet, dass** das Spannelement (22) ein Bremselement ist, das zum Bewirken einer passiven Spannung des entsprechenden flexiblen Verbindungselements (24) geeignet ist.

6. Förderer nach einem der vorangehenden Ansprüche, **dadurch gekennzeichnet, dass** jede Transporteinheit (18) wenigstens ein Transportelement (26) umfasst, das mit dem entsprechenden flexiblen Verbindungselement (24) verbunden ist.

7. Förderer nach Anspruch 6, **dadurch gekennzeichnet, dass** das Transportelement (26) um eine Achse quer zur Bewegungsrichtung (A) an das entsprechende flexible Verbindungselement (24) angelenkt ist.

8. Förderer nach Anspruch 7, **dadurch gekennzeichnet, dass** das Transportelement (26) einen Führungsabschnitt (32, 52) aufweist, der mit einer zu dem Stator (16) parallelen ortsfesten Führung (34) in Eingriff steht.

9. Förderer nach Anspruch 6, **dadurch gekennzeichnet, dass** jede Transporteinheit (18) eine Mehrzahl von Transportelementen (26) umfasst, die zwischen dem Antriebsbewegungselement (20) und dem Spannelement (22) angeordnet sind.

10. Förderer nach Anspruch 6, **dadurch gekennzeichnet, dass** er eine ortsfeste horizontale Wand (36) umfasst, die eine Längsnut (38) aufweist, durch die sich vorstehende Finger (28) der Transportelemente (26) erstrecken.

11. Förderer nach Anspruch 9, **dadurch gekennzeichnet, dass** jedes der Transportelemente (26) tangential zur Bewegungsrichtung A eine Wand (44) aufweist.

## Revendications

1. Convoyeur pour une ligne de conditionnement, comprenant au moins un moteur linéaire (14) comprenant un stator à boucle fermée (16) et une pluralité d'unités de transport autonomes (18) mobiles le long dudit stator (16) et commandées individuellement, dans lequel
chacune desdites unités de transport (18) comprend au moins un moteur de commande (20), le convoyeur étant **caractérisé en ce que** chacune desdites unités de transport comprend en outre au moins un élément de tension (22) et un élément de raccordement flexible (24) qui raccorde mutuellement ledit au moins un moteur de commande (20) et ledit au moins un élément de tension (22), dans lequel, à l'usage, ledit au moins un élément de tension (22) maintient ledit élément de raccordement flexible (24) dans un état tendu.

2. Convoyeur selon la revendication 1, **caractérisé en ce que** l'élément de tension (22) est un moteur d'entraînement du moteur linéaire (14), commandé afin de maintenir une tension active continue de l'élément de raccordement flexible (24) respectif.

3. Convoyeur selon la revendication 1, **caractérisé en ce que** l'élément de tension (22) est un moteur d'entraînement du moteur linéaire (14), commandé pour produire une tension active discontinue de l'élément de raccordement flexible (24) respectif et pour se déplacer en synchronisation avec le moteur de commande (20) respectif.

4. Convoyeur selon la revendication 1, **caractérisé en ce que** ledit élément de raccordement flexible (24) est élastique et **en ce que** ledit élément de tension (22) est un moteur d'entraînement du moteur linéaire (14), commandé pour se déplacer en synchronisation avec le moteur de commande (20) respectif, et dans lequel la tension de l'élément de raccordement flexible (24) est fournie par l'élasticité de l'élément de raccordement flexible (24).

5. Convoyeur selon la revendication 1, **caractérisé en ce que** ledit élément de tension (22) est un élément de frein approprié pour produire une tension passive de l'élément de raccordement flexible (24) respectif.

6. Convoyeur selon l'une quelconque des revendications précédentes, **caractérisé en ce que** chaque unité de transport (18) comprend au moins un élément de transport (26) raccordé à l'élément de raccordement flexible (24) respectif.

7. Convoyeur selon la revendication 6, **caractérisé en ce que** ledit élément de transport (26) est articulé à l'élément de raccordement flexible (24) respectif autour d'un axe transversal par rapport à la direction de déplacement (A).

8. Convoyeur selon la revendication 7, **caractérisé en ce que** ledit élément de transport (26) a une partie de guidage (32, 52) qui met en prise un guide fixe (34) parallèle audit stator (16).

9. Convoyeur selon la revendication 6, **caractérisé en ce que** chaque unité de transport (18) comprend une pluralité d'éléments de transport (26) agencés entre le moteur de commande (20) et l'élément de tension (22).

10. Convoyeur selon la revendication 6, **caractérisé en ce qu'**il comprend une paroi horizontale fixe (36) ayant une rainure longitudinale (38) à travers laquelle s'étendent des doigts en saillie (28) desdits éléments de transport (26).

11. Convoyeur selon la revendication 9, **caractérisé en ce que** chacun desdits éléments de transport (26) a une paroi (44) tangente à la direction de déplacement (A).
